Europäisches Patentamt

(19) European Patent Office

Office européen des brevets

(11) EP 0 907 117 A1

(12) EUROPEAN PATENT APPLICATION

(43) Date of publication:
07.04.1999 Bulletin 1999/14

(51) Int. Cl.$^6$: G05B 13/04

(21) Application number: 97500154.6

(22) Date of filing: 05.09.1997

(84) Designated Contracting States:
AT BE CH DE DK ES FI FR GB GR IE IT LI LU MC NL PT SE

(71) Applicant:
Communauté Européenne (CE)
2920 Luxembourg (LU)

(72) Inventors:
• Zaldivar, José Manuel
I-Taino (VA) (IT)
• Galvan, Ines
E-28911 Madrid (ES)

(74) Representative:
De Pablos Riba, Julio
Los Madrazo, 24
28014 Madrid (ES)

(54) Nonlinear neural predictive control system

(57) A nonlinear neural predictive control system provide for carrying out control actions on an industrial process the behavior of which can not be approximated by means of linear equations, generally a chemical process in which the control of one or more variables is requiered to be exerted, to carry out a prediction on the dynamical behavior of such a process in accordance with a nonlinear model up to a previously fixed prediction horizon in order to effect a calculation of the control signal at each sampling time by using a partially recurrent neural network in the controller.

FIG.2

**Description**

**OBJECT OF THE INVENTION**

The present invention relates to a nonlinear neural predictive control system, which concerns the implementation of a neural network in a controller to accomplish the dynamical behavior in a process, and to determine the control action on such a process as a function of the remaining variables thereof, presenting notable improvements as compared to predictive control sistems based on nonlinear models.

More concretely, the present invention consists of the construction of a nonlinear predictive control system which is able for considerably reducing the computational and therefore relevant cost for predictive control applications in real time by using an artificial neural network that will provide the control action to be applied to the dynamical process at each instant of time. The use of this network prevents that, on the one hand, a nonlinear optimization problem having to be solved at each instant of time, and on the other hand, the off-line estimates for the predictive control actions can be obtained, what favors reaching best control results for industrial dynamical processes.

The application field of the present invention comprises all those industrial applications requiring a control system to optimize any procedure. In particular, the invention may be applied to all the industrial procedures in which control automaton systems are usually used, as well as to any chemikcal process in which predictive control systems are used, for example to control the pH or the temperature on a given chemical process.

**BACKGROUND OF THE INVENTION**

Predictive control strategies have been developed mainly during the last decade, their applications having been extended to various industrial processes. In predictive control systems, the system controller carries out a prediction on the future system behavior before each action cycle on the same. Thus, the control signal profile or the manipulated variable is determined as a result of the optimization of a performance function within a interval of time which extends from the current time until a subsequent time corresponding to the current time plus a previously fixed prediction horizon. Frequently, the performance function evaluates the difference between the input value desired to be obtained, or selected point, and the theoretical value that would be obtained at the output, according to a model of the system, on the prediction horizon. Thus, if prediction provided by the model is acceptable, the controller will provide the desired behavior on the dynamical system, which will more or less faithfully reproduce the selected values.

US patent No. 4.197.576 grated to Martín (1976), adaptative predictive contraol systems are described, which constitute the initial idea on which the predictive control strategies are based. These strategies have been developed for linear dynamical systems in which linear models ARMA have been used to predict the future behavior future of said system. When the behavior in a system can be predicted by means of a linear model, the prediction equations can be explicitly solved in each action cycle on a application to a real time process. However, the most of the real dynamical systems have a behavior that can not be approximated by means of a linear model. In these systems, the utilization of a predictive controller based on a linear model can cause a low performance of said controller.

With the purpose to overcome these drawbacks, predictive control techniques based on nonlinear systems have been recently developed (Bequete, 1991; Eaton and Rawlings, 1992; Pröll and Karim, 1994). These techniques consist of introducing nonlinear models to describe the nonlinear behavior in real dynamical systems. Therefore, several artifical neural networks have been also used for developing nonliner predictive control systems in which models constructed from neural structures have been employed models to predict the dynamical behavior of the system through the prediction horizon.

The essential aim in a nonlinear predictive system is selecting a control signal or control action u(k), so that a performance or error function may result minimized, and which has the following form:

$$e(k+1) = \frac{1}{2}.\sum_{i=1}^{H} (y^{sp}(k+d+i) - y(k+d+i))^2 \quad (1)$$

where k is a discrete temporary variable, H is a natural number related with the prediction horizon that specifies the rage of future output values to be considered, d is the delay of the system, the values $y^{sp}$ comprise the desired sequence of points selected through the prediction horizon, and the values being the output values predicted by the system and provided by the nonlinear model. To delimit the optimization problem, it is supposed that the control action u(k) remains constant along the prediction horizon, that is to say, $u(k + 1) = ... = u(k + H)$ .

In these nonlinear predictive control systems, the variable manipulated to control the system is calculated by means of a optimization routine that determines in each cycle or sampling time the optimum control action that minimizes the difference between the desired output values ad those provided by the model in the prediction horizon. In each new sampling time, a new control action is calculated and applied to the real plant. Most of the nonlinear optimization algorithms use any kind of technique of search to explore the available space of the performance function until the extreme point being reached. This search is conducted by means of successive calculations of the performance function and its derivates, what implies the need for carrying out several iterations until reaching its extreme point, consisting on calculating the current control action. All this is a significant drawback when the control in a given real process is intended to be accomplished on real time by nonlinear predictive control systems because the required computational effort to calculate current control actions is too high.

The present invention pretends to overcome those drawbacks associated to a nonlinear predictive control system by replacing the optimization routines used in the previous art by a partially recurrent neural network, what notably reduces the computational effort by providing a relevant control scheme and suitable for real time applications in different industrial processes.

## SUMMARY OF THE INVENTION

The invention basically consists of a nonlinear predictive control system which includes a artificial neural network in order to calculate the predictive control action at every sampling time. Thus, it is avoided to solve a nonlinear optimization problem at every sampling tim and the computational effort is significantly reduced. The use of a neural network is based on the existence of a relationship between the current control action and the remaining variables of the system when a predictive strategy based on a model of the system is applied.

The structure of a neural predictive controller has been described in the following. Below, the type of used neural network will be introduced, for finally describing the learning phase of such neural network. For a best comprehension, it will be necessary to use those equations describing the relationship between the input ad output variables of the controller, as well as those equations associated with the neural network and those describing the learning rule.

Thus, it is to be supposed that the dynamical system to which the present invention is to be applied, may be represented by means of the following nonlinear NARMA model:

$$y(k + 1) = F(y(k),......,y(K-n_y), u(k-d),....,u(k-d-n_u)) \qquad (2)$$

where $y(.)$ and $u(.)$ respectively denote discrete sequences of input and output values in the dynamical system.

As previously mentioned, the aim of the predictive control strategies is the determination of the control action or signal $u(k)$, so that the performance function or error function defined by the equation 1, hold to the restrictions $u(k) =....= u(k + H)$ (that is to say, the condition for the control action to be maintained constant in the prediction horizon), becomes minimized. If it is supposed that the values $y(k + d + i)$, $i = 1,....,H$ provided by the nonlinear model that appear in the equation 1 are equal to the output values measured on the system, from the equation 2 is deduced that the future values can be expressed in the following manner:

$$y(k+1) = F(y(k),....,y(k-n_y),u(k-d),....,u(k-d-n_u)) \quad (3)$$

$$y(k+2) = F(y(k+1),...,y(k-(n_y-1)),u(k-(d-1)),...,u(k-(d+n_u-1))) \quad (4)$$

$$....$$

$$y(k+d+1) = F(y(k+d)),...,y(k+d-n_y),u(k),...,u(k-n_u)) \quad (5)$$

$$....$$

$$y(k+d+H) = F(y(k+d+H-1),...,y(k+d+H-n_y),u(k+H),...,u(k+H-n_u)) \quad (6)$$

By replacing $y(k + 1)$ at the right part of the equation 4 by the equation 3, it will be observed that $y(k + 2)$ can be written as a function of the terms:

$$y(k),...,y(k-(n_y-1)),y(k-n_y), u(k-(d-1)),u(k-d),...,u(k-(d+n_u))$$

By effecting successive substitutions downward until reaching the term $y(k+d+H)$, and imposing as a condition that the control action remains constant during the prediction horizon, $u(k) = u(k+1) = ... = u(k+H)$, the values $y(k+d+i)$ with $i = 1,...,H$, can be expressed in terms of the sequence:

$$y(k),...,y(k-n_y),u(k),...,u(k-d),...,u(k-d-n_u)$$

that is to say, in terms of the available information in the discrete time k. Consequently, the control action u(k) that minimizes the error function defined by the equation 1, can be written in the following form:

$$u(k) = P(y^{sp}(k+d+1),y^{sp}(k+d+H),y(k),...,y(k-n_y),u(k-1),..., u(k-d-n_u)) \tag{7}$$

where P would be an application determining the solution of the optimization problem given by the equation 1. Putting as a condition that the point selected in the input, $y^{sp}$, remains constant in the prediction horizon, the equation 7 representing the control action can be simplified, the following form being obtained:

$$u(k) = P(y^{sp},y(k),...,y(k-n_y),u(k-1),...,u(k-d-n_u)) \tag{8}$$

By knowing the function P, the expression given by the equation 8 provides, in each discrete time k, the control action that is to be applied to the system in order to reach the desired control objective. However, in the nonlinear case, the functional P is difficult to determine in an explicit manner. But, taking this consideration as the based, it can be guaranteed that there exists a relationship between the current control action and the discrete sequences of the input and output values of the system variables. This last point justifies the use of a partially recurrent neural network, according to the system of the present invention. Furthermore, the proven capacity for approximation of functions provided by a multilayer neural network (Cybenko, 1989), has been taken into account.

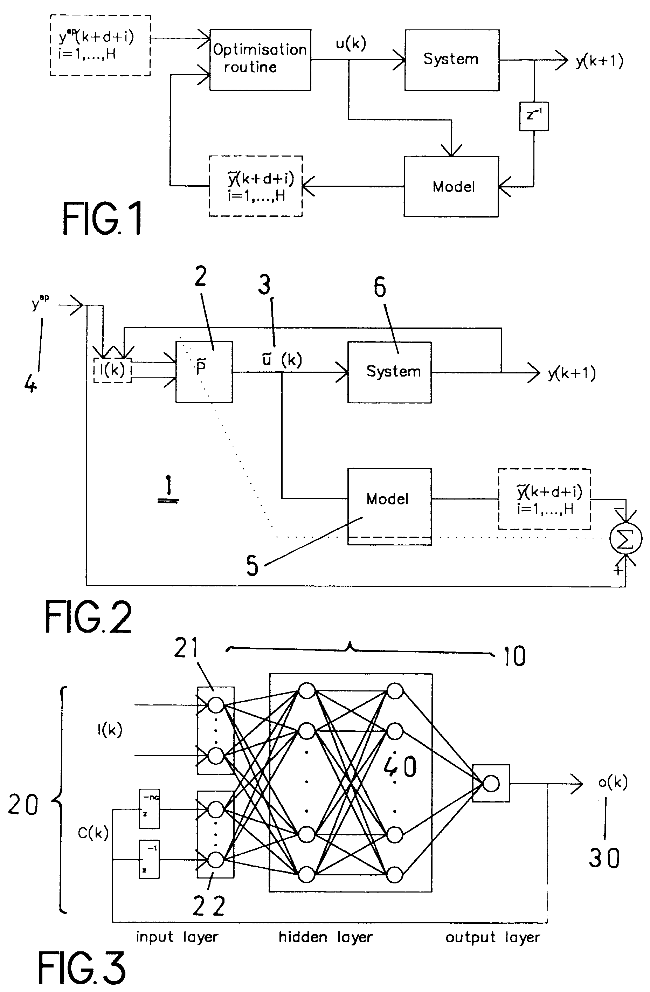

The neural network used in the present invention has a particular structure of partially recurrent neural network shown in figure 3. According to this architecture, the network is divided into an input layer, one or more hidden layers and an output layer. The input layer is formed by two groups of neurons. The first group acts as an input to the network to receive the imput patterns from the external world, represented by the vector $1(k) = (I_1(k),...,I_{n1}(k))$. The second group is formed by the context neurons which memorize the output values of the network associated to patterns previously introduced. The activation of the context neurons is given by the vector $C(k) = (C_1(k),...,C_{nc}(k))$, the components of which are calculated such as expressed in the following equation:

$$C_i(k) = o((k-i)) \quad i = 1,....,n_c \tag{9}$$

where o(k) is the response from the network to the k-th imput pattern.

A neural network composed by L layers will be considered, each layer containing $n_1$ neurons, for $1=1,...,L$. Referring $s^1_j(k)$ to as the activation of the j-th node located at the 1-th layer of the multilayer network for the k-th input pattern. According to the above, the equations describing the activation of the partially recurrent neural network can be expressed as follows:

$$s^1_j(k) = I_j(k), \quad j = 1,....,n_1 \tag{10}$$

$$s^1_{j+n1}(k) = \begin{cases} t(k) & k \leq n_c \\ c_j(k) & k \geq n_c+1 \end{cases}, \quad j = 1,....,n_1 \tag{11}$$

where t(k) is the target output.

$$s^{1j}(k) = \sigma(\sum_{i=1}^{n_c-1} w^1_{ji} \cdot s^{l-1}_i(k) + \mu^1_j); \quad j = 1,...,n_c; \quad 1 = 2,...,L \tag{12}$$

$$\sigma(k) = s^L{}_1(k) \qquad\qquad (13)$$

where:

(i) $W^1 = (w^1{}_{ji})$ is the matrix weight associated to the connections between the nodes located at the (l-1)-th layer and the layer l-th. $\Pi^1 = (\mu^l{}_j)$ is the vector bias associated to the nodes of the l-th layer. Both weights and bias are the adjustable parameters of the network.

(ii) $\sigma(x)$ is the activation function which is often chosen from smooth sigmoidal functions.

$$\sigma(x) = \frac{1}{1+e^{-x}}; \qquad \sigma(x) = \frac{e^x-e^{-x}}{e^x+e^{-x}}$$

Introducing the vector $I(k) = (y^{sp},y(k),...,y(k-n_y))$ as the vector of the input values ad considering $d+n_u$ context neurons, the functional P in the equation 8 can be approximated, as previously indicated, by the partially recurrent neural netsork of the control system of the present invention. Therefore, the predictive control action, described by the equation 14, it is the only output of the network.

$$\tilde{u}(k) = P(I(k),C(k),W_P = \ldots$$
$$\ldots\ldots = P(y^{sp},y(k),\ldots,y(k-n_y),C_1(k),\ldots,C_{d-nu}(k),W_P) \quad (14)$$

where $C_i(k) = \tilde{u}(k-i)$ with $i = 1,...,d+n_u$ and $W_P$ is the parameters set of the network.

Until now, the structure of the partially recurrent neural network used to approximate the functional P, has been described. In the following, it will be described the learning rule of the net, what is carried out in order to determine the parameters set $W_P$ on the ground of which it is to be achieved that the control law expressed by the equation 14, provides the desired predictive control.

The learning procedure of the network takes place when the controller is operating, and the input patterns are obtained from the direct evolution of the real system. Provided that a model of the system provides the approximate output values of the system within the prediction horizon, the network parameters are updated on real time, in the address of the negative gradient of the error function of equation 1.

Considering $w_P$ a weight of the partially recurrent network; the variation of said error function, given by the equation 1, with respect to this parameter is given by:

$$\frac{\partial e(k+1)}{\partial w_P} = -\sum_{i=1}^{H} (y^{sp}+y(k+d+i)) \frac{\partial y(k+d+i)}{\partial w_P} \quad (15)$$

The variation int the output values from the model with respect to said weight of the network along the prediction horizon is calculated by using the chain rule in the following manner:

$$\frac{\partial y(k+d+i)}{\partial w_p} = \frac{\partial y(k+d+i)}{\partial \tilde{u}(k+i)} \cdot \frac{\partial \tilde{u}(k+i)}{\partial w_p}, \quad i = 1,....,H \quad (16)$$

Since the control action remains constant during the prediction horizon, the terms $\partial \tilde{u}(k+i)/\partial w_p$ with i = 1,...H, also remain constant, and therefore equal to $\partial \tilde{u}(k)/\partial w_p$. Thus, the equation 16 can be written in the following manner:

$$\frac{\partial y(k+d+i)}{\partial w_p} = \frac{\partial y(k+d+i)}{\partial \tilde{u}(k)} \cdot \frac{\partial \tilde{u}(k)}{\partial w_p} \quad (17)$$

where the terms $\partial y(k + d + i)/\partial w_p$, i = 1,....,H, constitute the Jacobian for the model through the prediction horizon,

$$\text{and the term } \frac{\partial \tilde{u}(k)}{\partial w_p}$$

represents the variation in the output value from the network with respect to said weight $w_p$. Due to the fact that the partially recurrent neural network of the present invention is a multilayer network, the last term is calculated using the backpropagation algorithm (Rumelhart et al., 1986).

As a consequence, the neural predictive controller parameters are updated at every sampling time, with the use of the following learning rule:

$$w_p{}^{(k+1)} = w_p{}^{(k)} + \alpha. \frac{\partial \tilde{u}(k)}{\partial w_p} \sum_{i=1}^{H} (y^{sp}-y(k+d+i)). \frac{\partial y(k+d+i)}{\partial \tilde{u}(k)} \quad (18)$$

The neural predictive controller operation and its learning procedure can be summarized by the following four points:

1) At every sampling time k, the input values vector 1(k) = $(y^{sp},y(k),...,y(k-n_y))$ is introduced into the network. Its corresponding output value. $\tilde{u}(k)$, is implemented in both the real system and the system model.

2) The term $\partial \tilde{u}(k)/\partial w_p$ is calculated using a backpropagation algorithm as the previously mentioned one.

3) Errors given by the difference $(y^{sp}-y(k + d + i))$ are evaluated, and also Jacobians $\partial y(k + d + i )/\partial \tilde{u}(k)$, i = 1,...,H of the system model.

4) Parameters in the neural network are adjusted using the equation 18, and the same proedure is repeated in the next sampling time k + 1.

## BRIEF DESCRIPTION OF DRAWINGS

Figure 1 shows a block diagram graph for a predictive control system based on a nonlinear model as proposed in the previous art; Figure 2 shows a block diagram for a nonlinear neural predictive control

system according to the present invention;

Figure 3 schematically shows a partially recurrent neural network structure; and

Figure 4 are shows performance graphics for a neural predictive controller in accordance wih the present invention, applied to the temperature control on a heat transfer fluid that transfers heat in a chemical bath reactor.

Figure 5 shows, from a comparative manner, graphics about the performance on a PID controller used in the previous art to control of the same process than that figure 4.

## DETAILED DESCRIPTION OF THE PREFERRED EMBODIMENT

Figure 2 shows a neural predictive control system block diagram of the present invention. According to that described in the summary, $y^{sp}$ is the value (4) select at the system input and which constitutes the control target, or the desired value to be obtained for a given variable of the system or the real plant. Therefore, said value (4) is a coordinate of vector I(k) for input patterns of the neural network (2) at the current sampling time k. The remaining coordinates for the vector I(k) comprise a sequence of values $y(k),...,y(k-n_y)$ corresponding to the current real value and a series of previous values in the variable which is intended to be controlled in the system (6). The model (5) of the system (6) is used to effect the prediction about the behavior of the system (6) and, in short, to effect the calculation of the system jacobians in the learning rule of the neural network (2).

Figure 3 shows a partially recurrent neural network (10) in which an input neurons layer (20), two hidden layers (40) and an output neuron (30) can be appreciated. The layer (20) comprises the first neurons group (21) which receive the input patterns I(k), and a second context neurons group (22) destined for memorizing those values (30) exiting from the neural network (10).

In the following, a preferred embodiment of the invention will be described, which consists of the application of the control system of the present invention to a chemical bath reactor wherein the temperature $T_e$ in the heat transfer fluid is to be controlled. To illustrate the efficiency of the proposed system, it has been considered as convenient to carry out a comparison of its performance with respect to that of the PID controller which is currently installed in the plant. Performance of controller of the present invention has not been compared to that from the nonlinear predictive controller of figure 1 petaining to the previous art, due to the fact that last required an excessive calculation time.

The control tests were effected using 80 Kg water within the reactor and a stirrer pfaudler with a stirring rate of 5 $s^{-1}$ was used. The sampling time was about 10 s. Two control targets or selected points were defined. Staring from the initial condition Te(0) = 15 °C the first desired target is to follow a control reference established at $Te^{sp}$ = 23 °C, while the second target consists of reaching $Te^{sp}$= 15 °C when Te(0) = 23 °C.

Following the steps described in the summary of the invention, it is deduced that the predictive control law adopts the following form:

$$\bar{u}(k) \;=\; P(Te^{sp}\text{-}Te(k), Te(k)\text{-}Tr(k), C_1(k),\ldots,C_4(k)W_b) \qquad (19)$$

where $T_r$ is the temperature in the reactor and $C_i(k) = \tilde{u}(k\text{-}i)$ , i = 1,2,3,4. The neural architecture as used had a hidden layer with ten neurons, and the activation sigmoidals functions were defined in the interval [0, 1]. The predictive control law was initialized with parameters containing information about inverse systems dynamics.

The nonlinear model used to predict the dynamical behavior of the plant along the prediction horizon was a NARMA neural model adopting the following structure:

$$\overline{T}(k+1) \; = \; \overline{T}(k) + F(u(k\text{-}3),\ldots,u(k\text{-}23),Tr(k),Tr(k\text{-}1),$$

$$Tc(k),Ta(k),\overline{T}e(k\text{-}1),\overline{T}(k\text{-}2),W_p) \qquad (20)$$

where Ta and Tc are respectively the ambient temperature and the cooling temperature, F is a neural approximation, $\overline{T}e$ is the temperature in the heat transfers fluid, and $W_p$ is the parameters set of the neural model.

The capacity of this model to approximate the dynamical behavior of the real plant has been proven with success.

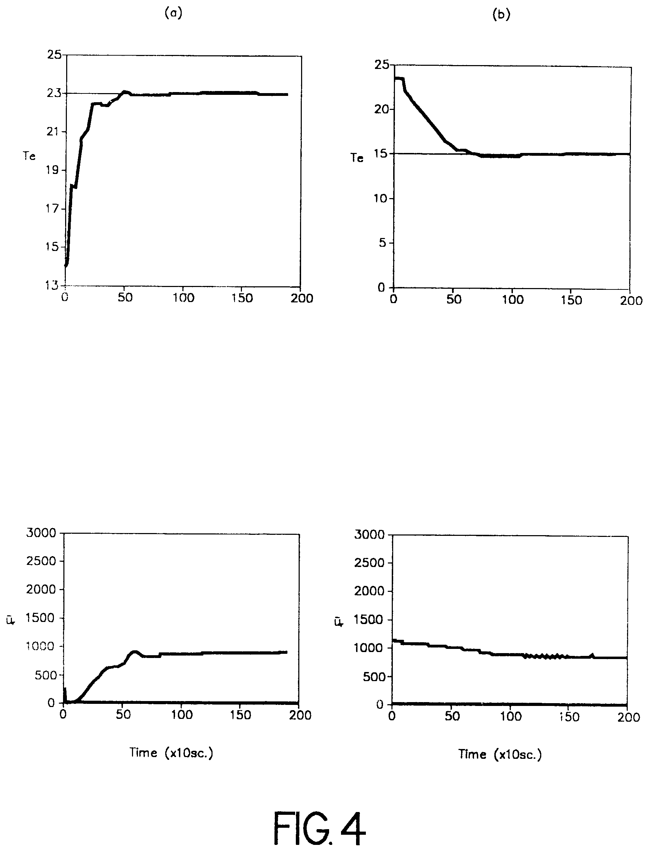

After several tests using the model of plant given by the equation 20, the prediction horizon for the heating mode was fixed in 40 sampling times, that is to say, 400 s. At each sampling time, the neural model given by the equation 20 provided the approximate output values from the system on the prediction horizon, and the predictive controller parameters were updated in real time using the learning rule given by the equation 18 and a learning rate fixed to 0,0005. The evolution of the temperature in the heat transfer fluid that transfers heat and the control signal are shown in figure 4(a).

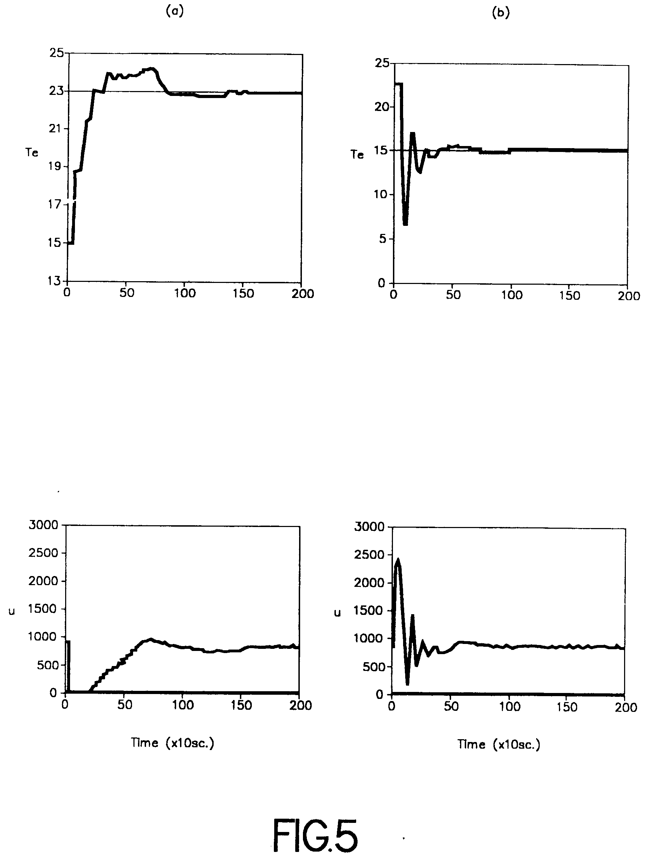

For the second control target, i.e. the cooling to $Te^{sp}$ = 15 °C, the prediction horizon was increased until 70 sampling times, that is to say 700 s. Figure 4(b) shows the performance of the predictive controller in the cooling mode. The controller parameters were also updated in real time using the learning rule given by the equation 18, the learning being fixed in 0,0005. The performance of the predictive controller is compared with that from a PID controller installed in the plant, whose performace on the same process has been shown in figure 5(a) for the first heating target, and figure 5(b) for the secondo cooling second. The obtained results express the notable improvements obtained with the predictive control system of the present invention relative to other previously used control procedures.

## Claims

1. A nonlinear neural predictive control system (1), applicable in real time to nonlinar dynamical processes in order to favor reaching best control results on industrial processes, for example on certain chemical processes in which predictive control systems are to be used, or to any other process in the which a control on one or more variables is required to be exerted by using a prediction on the dynamical behavior which provides a nonlinear model (5) of the system, comprising the use of a partially recurrent neural network (2) in the controller, in order to develop the predictive control system (6) and thus calculate the predictive control action (3) causing the desired behavior on said process, in every sampling time or action cycle on a process of said system (6), destined to achieve on such a process the control target or selected value (4) corresponding to $y^{sp}$, all this considerably reducing the computational cost and permiting to obtain off-line estimates for the control actions.

2. A non linear neural predictive control system (1) according to claim 1, wherein the mentioned neural network is a partially recurrent neural multilayer network (2,10), having an input layer (20) constituted by two neurons groups (21, 22), a first group (21) acting as input patterns I(k) from the external world, and a second context neurons group (22) which memorize the output netwotk values (30) in every sampling time; one or more hidden layers (40); and an output layer (30).

3. A nonlinear neural predictive control system (1) according to claims 1 and 2, wherein the control action (3, 30) is expressed as a function of those variables intervening on the process, what permits off-line estimates of the predictive control system can be obtained, thus favoring achieving the best control results on industrial dynamicla processes, that being the only output value from the neural network (2, 10) and being given by the equation:

$$\overline{u}(k) = P(I(k),C(k),W_p) = P(y^{sp},y(k),\ldots,y(k\text{-}n_y),C_1(k),\ldots,C_{d+nu},W_p)$$

where:

P is a function approximated by means of the partially recurrent neural network (2, 10);
k is a discrete temporary variable denoting the current sampling time;
$1(k) = (y^{sp},y(k),\ldots,y(k\text{-}n_y))$ is a vector corresponding to the pattern of input values in the network from the outside, $y^{sp}$ being the desired selected value to be obtained in the system, and $y(k),...,y(k-n_y)$ the sequence of values obtained in the system from the sampling time $k-n_y$ (where $n_y$ is a natural number determined by the number of the first neurons group) until the current sampling time $k$;

$C(k) = C_i(k) = \tilde{u}(k-i)$ is a vector corresponding to the control action values in those previous sampling times memorized by the context neurons, $d + n_u$ being the number of context neurons of the network;

and the matrix $W_p$ being the parameters set of the neural network.

4. A nonlinear neural predictive control system (1) according to the preceding claims, wherein the learning rule of the neural network is given by the equation:

$$w_p^{(k+1)} = w_p^{(k)} + \alpha . \frac{\partial \tilde{u}(k)}{\partial w_p} . \sum_{i=1}^{H} (y^{sp} - y(k+d+i)) . \frac{\partial y(k+d+i)}{\partial \tilde{u}(k)}$$

where:

$w_p^{(k+1)}$ represents the network parameters in the sampling time $k + 1$;

$w_p^{(k)}$ represents the network parameters in the current sampling time $k$;

$\alpha$ is the previously fixed learning rate;

$\tilde{u}$ is the predicted control action

$y(k + d + i)$, $i=1,...,H$ are the output predicted values by system model in the prediction horizon.

FIG.1

FIG.2

FIG.3

(a)  (b)

FIG. 4

(a)

(b)

Time (x10sc.)

Time (x10sc.)

# FIG.5

**European Patent Office**

**EUROPEAN SEARCH REPORT**

Application Number

EP 97 50 0154

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | GB 2 258 742 A (TOKYO SHIBAURA ELECTRIC CO)<br>* the whole document * | 1 | G05B13/04 |
| A | US 5 566 275 A (KANO MAKOTO)<br>* the whole document * | 1 | |
| A | EP 0 512 856 A (SD SCICON UK LIMITED)<br>* the whole document * | 1 | |
| A | T.LONG: "A SELF SIMILAR NEURAL NETWORK FOR DISRIBUTED VIBRATION CONTROL"<br>PROCEEDINGS OF THE 32ND CONFERENCE ON DECISION AND CONTROL ,<br>vol. 4, 15 December 1993, USA,<br>pages 3243-3248, XP000448728<br>* the whole document * | 1 | |
| A | P.KIRKEGAARD: "MODELLING OF NON-LINEAR STRUCTURES USING RECURRENT NEURAL NETWORKS"<br>DEVELOPMENTS IN NEURAL NETWORKS AND EVOLUTIONARY COMPUTING FOR CIVIL AND STRUCTURAL ENGINEERING ,<br>28 August 1995, UK,<br>pages 51-58, XP002052854<br>* the whole document * | 1 | **TECHNICAL FIELDS SEARCHED (Int.Cl.6)**<br><br>G05B |

The present search report has been drawn up for all claims

| Place of search | Date of completion of the search | Examiner |
|---|---|---|
| THE HAGUE | 29 January 1998 | Kelperis, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)